# EUROPÄISCHE PATENTSCHRIFT

(11) **EP 1 685 888 B1**
(45) Veröffentlichungstag und Bekanntmachung des Hinweises auf die Patenterteilung: **04.04.2007**
(21) Anmeldenummer: 06000770.5
(22) Anmeldetag: 14.01.2006
(51) Int. Cl.: B01D 29/11, B01D 29/54, B01D 29/68, B01D 29/70

(54) **Rückspülbare Filtereinrichtung mit Strömungsstörkörpern**
Backwash filter with flow bodies for disturbing the fluid flow
Dispositif de filtration avec un système de lavage à contre courant comprenant des éléments perturbant le courant

(30) Priorität: 31.01.2005 DE 102005004553
(43) Veröffentlichungstag der Anmeldung: 02.08.2006
(73) Patentinhaber: Honeywell Technologies Sarl ECC, 1110 Morges (CH)
(72) Erfinder: Miecznik, Bert, 97072 Würzburg (DE)
(74) Vertreter: Graefe, Jörg

(56) Entgegenhaltungen:
- EP-A- 0 723 797
- EP-A- 1 129 756
- DE-U1- 8 438 010

## Beschreibung

Die Erfindung betrifft eine rückspülbare Filtereinrichtung, insbesondere für eine Hauswasseranlage, mit einem Hauptfilter, mit dem im Normalbetrieb ein zu filterndes Medium filterbar ist, und mit einem Spritzmittel, mit dem im Rückspülbetrieb das Hauptfilter abspritzbar ist und das im Rückspülbetrieb zum Abspritzen des Hauptfilters bewegbar ist, wobei das Spritzmittel ein oder mehrere Austrittsdüsen umfasst.

Eine derartige rückspülbare Filtereinrichtung ist aus der europäischen Patentschrift mit der Veröffentlichungsnummer EP 0 723 797 B1 bekannt. Diese bekannte Filtereinrichtung weist einen im Normalbetrieb von außen nach innen und im Rückspülbetrieb von innen nach außen durchströmtes Hauptfilter auf. Zwischen einem Einlass der Filtereinrichtung und dem Hauptfilter ist ein Absperrventil angeordnet, das geschlossen wird, wenn die Rückspülung eingeleitet wird. Daraufhin wird über ein Vorfilter ein Spülmedium dem Inneren des Hauptfilters zugeführt. Von dort aus gelangt das Spülmedium durch die Poren des Hauptfilters nach außen. Zur Verbesserung der Reinigung des Hauptfilters ist in diesem drehbar ein Spritzmittel gelagert, das beim Rückspülbetrieb durch die Strömung des Spülmediums angetrieben wird. Dieses Spritzmittel wird in der Druckschrift auch als Impeller bezeichnet. Der Impeller gibt das Spülmedium während der Rückspülung durch die radial angeordneten Austrittsdüsen ab, die sich über die gesamte Höhe des Impellers erstrecken oder auch beispielsweise über Stege abgeteilt, nur über einen Teil der Impellerhöhe einnehmen können.

Die genannten Austrittsdüsen sind zur Vermeidung einer Unwucht während der Drehung symmetrisch um 180° versetzt aus zwei Seiten des Impellers angeordnet. Durch die Austrittsdüsen tritt das Spülmedium während der Rückspülung aus, um dadurch eine Reinigungswirkung auf das Hauptfilter zu erzielen. Gleichzeitig wird durch die radiale Anformung der Austrittsdüsen bei Fluidaustritt die Rotation des Impellers bewirkt.

Der freie Durchmesser beziehungsweise die Spaltbreite der Austrittsdüsen bestimmt bei der bekannten Filtereinrichtung sowohl über den austretenden Volumenstrom die Reinigungsleistung als auch das aufgebrachte Drehmoment. Bezüglich beider Eigenschaften ist es günstig, einen möglichst großen Düsenquerschnitt zu wählen. Dadurch steigt allerdings der Verbrauch des für die Rückspülung notwendigen Spülmediums. Üblicherweise wird experimentell ein technisch und wirtschaftlich sinnvoller Kompromiss zwischen Reinigungsleistung, Drehmoment und Spülmediumverbrauch gefunden. Es erweist sich aus der Praxis, dass das Drehmoment hierbei als relativ unkritisch angesehen werden kann, so dass der Kompromiss sich auf die beiden Faktoren Reinigungsleistung auf der einen Seite und Verbrauch des Spülmediums auf der anderen Seite beschränkten lässt. Der Kompromiss versucht dabei eine Lösung zwischen dem technischen Widerspruch zu finden, nachdem einerseits die Austrittsdüsen möglichst groß sein sollen, um eine ausreichende Reinigungsleistung zu erzielen und andererseits die Düsen aber möglichst klein sein sollen, um den Verbrauch des Spülmediums für die Rückspülung zu begrenzen.

Durch die Drehung des Impellers innerhalb des Hauptfilters wird nach und nach der gesamte Hauptfilter der Reinigung durch die Rückspülung unterzogen. Zur Verbesserung der Reinigungsleistung kann neben der Größe des Volumenstroms auch die Rückspüldauer verändert werden. Außerdem beeinflussen Faktoren wie die Beschaffenheit des filtrierten Mediums sowie der in diesem Medium enthaltenden partikelförmigen Verunreinigungen das Durchsatzprofil während des Filtrationsvorgangs und die Zeitdauer zwischen zwei Rückspülungen (Rückspülintervall) die Rückspülleistung der rückspülbaren Filtereinrichtung. Von diesen weiteren Faktoren lässt sich in vielen Fällen allenfalls das Rückspülintervall durch den Benutzer beeinflussen, da die anderen Faktoren von außen aufgeprägte Betriebsbedingungen sind, die durch den Benutzer meist nicht verändert werden können.

Allen drei dem Benutzer zugänglichen Einflussfaktoren, nämlich der Rückspüldauer, dem Rückspülintervall und dem Volumenstrom ist gemein, dass eine im Einzelfall erwünschte, verbesserte Rückspülleistung stets mit einem Mehrverbrauch an Spülmedium einhergeht, welches als Abfallmedium entsorgt werden muss. Dieser Mehrverbrauch ergibt sich dabei entweder durch einen größeren Volumenstrom oder aber einer verlängerten Rückspülzeit mit einem entsprechend verlängerten Anfall des Abfallmediums oder einem verkürzten Rückspülintervall mit entsprechend häufigerem Anfall des Abfallmediums.

Der Erfindung liegt daher die Aufgabe zugrunde, die Effektivität der rückspülbaren Filtereinrichtung während des Rückspülbetriebs zu verbessern, um Spülmedium einzusparen.

Diese Aufgabe wird dadurch gelöst, dass in einem Bereich strömungstechnisch vor den Austrittsdüsen Strömungsstörkörper beweglich angeordnet sind. Die Strömungsstörkörper bewegen sich während des Rückspülbetriebs vor den Düsen und verändern dadurch die Austrittsöffnung der Austrittsdüsen. Die Variation und insbesondere eine Verkleinerung der Austrittsöffnungen der Austrittsdüsen führt auf der einen Seite zu einem geringeren Gebrauch des Spülmediums und auf der anderen Seite ergeben sich, da die Veränderungen weitgehend unkontrolliert erfolgen, chaotische Strömungen an den Austrittsdüsen, mit Zonen mit größerer und Zonen mit geringeren Volumenströmen. Insgesamt wird dadurch eine verbesserte Reinigungsleistung der rückspülbaren Filtereinrichtung während des Rückspülbetriebs erzielt. Eine derartige erfindungsgemäße Vorrichtung kann ein Vorfilter umfassen, über welche die Spülflüssigkeit im Rückspülbetrieb geleitet wird, bevor diese dem Hauptfilter zugeleitet wird.

Die Strömungsstörkörper können gemäß der Erfindung Kugeln sein.

Die Filtereinrichtung weist vorzugsweise Elemente zur Erzeugung von im Rückspülbetrieb auf die Strömungsstörkörper einwirkenden Impulsen, sogenannte lmpulselemente auf. Diese Impulselemente können so angeordnet sein, dass im Rückspülbetrieb die Impulse mit einer ersten Richtung im Wesentlichen quer zur Bewegungsrichtung des Spülmediums auf die Strömungsstörkörper einwirken. Die Strömungsstörkörper sind bei einer bevorzugten erfindungsgemäßen Filtereinrichtung in einem Raum angeordnet, in dem sich die Strömungsstörkörper zumindest in der ersten Richtung bewegen können. Dieser Raum wird nachfolgend Bewegungsraum genannt.

Das Hauptfilter einer erfindungsgemäßen Filtereinrichtung kann hohlzylindrisch ausgebildet sein. Das Spritzmittel kann dann drehbar in dem Hauptfilter gelagert sein. Die Austrittsdüsen eines solchen Spritzmittels sind vorteilhaft im Wesentlichen radial nach außen ausgerichtet. Der Bewegungsraum ist vorteilhaft radial innenliegend zu den Austrittsdüsen in dem Spritzmittel vorgesehen.

Die Austrittsdüsen können schlitzförmig zum Beispiel als Flachdüsen ausgebildet sein. Mehreren benachbart zueinander angeordneten Austrittsdüsen kann ein gemeinsamer Bewegungsraum zugeordnet sein, in dem mehrere Strömungsstörkörper angeordnet sind.

Das Spritzmittel einer erfindungsgemäßen Vorrichtung kann einen sich im Wesentlichen axial erstreckenden zentralen Durchströmraum aufweisen, durch den das Spülmedium im Rückspülbetrieb hindurchströmen kann. Über diesen Durchströmraum wird das Spülmedium dann den Austrittsdüsen zugeführt. Der Durchströmraum ist dann bevorzugt strömungstechnisch mit den Bewegungsräumen beziehungsweise mit einem Bewegungsraum verbunden.

Die Impulselemente können bei einer erfindungsgemäßen Vorrichtung zumindest einen ersten Kanal im Spritzmittel umfassen. Jeder erste Kanal kann bei einer erfindungsgemäßen Vorrichtung einem Bewegungsraum zugeordnet und mit diesem strömungstechnisch verbunden sein, wobei eine Mündung der ersten Kanäle an ihren ersten Kanalenden in dem Bewegungsraum so ausgestaltet ist, dass ein Fluid in der ersten Richtung in den zugeordneten Bewegungsraum einströmt. Damit ist sichergestellt, dass die Strömungsstörkörper, die im Bewegungsraum angeordnet sind, eine Kraft in die erste Richtung erfahren.

Der Bewegungsraum einer erfindungsgemäßen Filtereinrichtung kann sich parallel zur Rotationsachse des Spritzmittels erstrecken. In einer senkrechten Einbaurichtung des Spritzmittels beziehungsweise des Hauptfilters können sich die ersten Kanalenden der ersten Kanäle am unteren Ende des zugeordneten Bewegungsraums befinden. Die Strömungsstörkörper haben dann vorteilhaft eine Dichte, die größer ist als die Dichte des vorgesehenen Spülmediums.

Alternativ können in einer senkrechten Einbaurichtung des Spritzmittels beziehungsweise des Hauptfilters die ersten Kanalenden der ersten Kanäle am oberen Ende der zugeordneten Bewegungsräume sein. Dann haben die Strömungsstörkörper vorteilhaft jedoch eine Dichte, die kleiner ist als die Dichte des Spülmediums.

Die ersten Kanäle können zweite Kanalenden haben, die in einer im Spülbetrieb außen liegenden und rotierenden ersten Fläche des Spritzmittels liegen.

Die Impulselemente können ferner zumindest einen zweiten Kanal umfassen, der sich in einem im Rückspülbetrieb in der relativ zum Spritzmittel drehenden Teil der Filtereinrichtung befindet. D. h. bei einem sich im Rückspülbetrieb drehenden Spritzmittel kann dieses Teil der Filtereinrichtung feststehen.

Das Teil der Filtereinrichtung kann zum Beispiel das Hauptfilter oder ein mit dem Hauptfilter fest verbundenes Teil, zum Beispiel ein Vorfilter sein. Ein solcher Vorfilter wird im Rückspülbetrieb dazu benutzt, dem Hauptfilter das Spülmedium vorgefiltert zuzuführen.

Der zweite Kanal kann ein erstes Kanalende aufweisen, das in einer zweiten Fläche und zwar einer Fläche des Teils mündet, die im Rückspülbetrieb an der ersten Fläche anliegt. Dieses erste Kanalende der zweiten Kanäle kann im Spülbetrieb bei einer Umdrehung des Spritzmittels mit zumindest einem zweiten Kanalende eines ersten Kanals in strömungstechnischer Verbindung stehen, um das Spülmedium pulsweise in den Bewegungsraum zu leiten.

Das zweite Kanalende des zweiten Kanals ist dann vorzugsweise in einem Bereich der Filtereinrichtung vorgesehen, über den im Rückspülbetrieb das Spülmedium dem Haupt- oder Vorfilter zumindest mittelbar zugeführt werden kann.

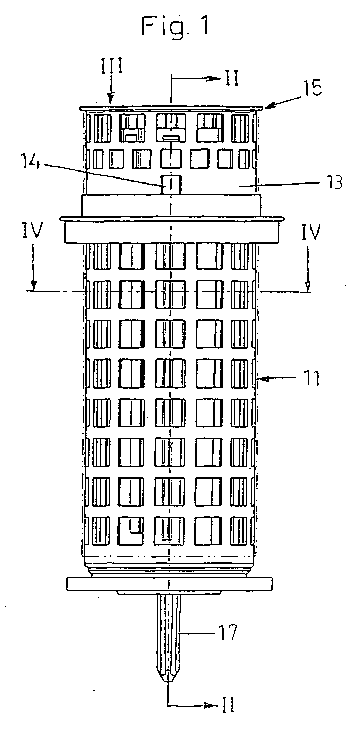

Ein Spritzmittel und eine Einheit aus einem Hauptfilter und einem Vorfilter einer erfindungsgemäßen rückspülbaren Filtereinrichtung sind anhand der Zeichnung näher beschrieben. Darin zeigt
- Fig. 1: eine Einheit aus dem Hauptfilter und dem Vorfilter in einer Seitenansicht,
- Fig. 2: die Filtereinheit gemäß Fig. 1 im Längsschnitt,
- Fig. 3: eine Draufsicht auf die Filtereinheit,
- Fig. 4: einen Schnitt durch die Filtereinheit gemäß der Linie IV-IV in Fig. 1,
- Fig. 5: eine perspektivische Darstellung eines Spritzmittels,
- Fig. 6: das Spritzmittel gemäß Fig. 5 mit einem herausgezogenen Einsatzteil und
- Fig. 7: das Einsatzteil.

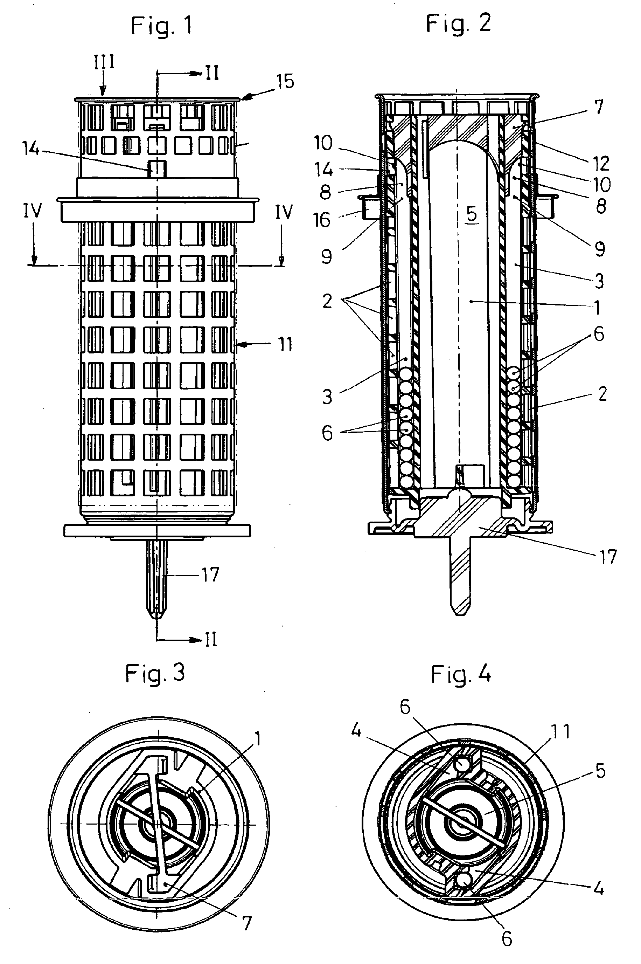

Das Hauptfilter 11 und das Vorfilter 12 der in der Fig. 3 dargestellten Filtereinheit 15 sind hohlzylindrisch und einstückig ausgebildet. Das Hauptfilter 11 und das Vorfilter 12 sind von einem von außen auf das Hauptfilter 11 beziehungsweise das Vorfilter 12 aufgesetzten Ring 16 voneinander getrennt. Der Ring 16 weist einen auskragenden, umlaufenden Bund auf, der einer Verschiebung der Filtereinheit 15 beim Wechsel vom Normalbetrieb in den Rückspülbetrieb dazu dient, die Außenseiten von Hauptfilter 11 und Vorfilter 12 gegeneinander abzudichten. Die Funktion des Ringes 16 und die Funktion einer rückspülbaren Filtereinrichtung im Allgemeinen mit einer solchen Filtereinheit 15 ist in der Druckschrift EP 0 723 797 B1 beschrieben.

In einer senkrechten Einbaurichtung des Filterelements 15 ist das Hauptfilter 11 unterhalb des Vorfilters 12 angeordnet. Die Filtereinheit 15 weist neben dem Vorfilter 12, dem Hauptfilter 11, dem Ring 16 am unteren Ende (bezogen auf die senkrechte Einbaurichtung der Filtereinheit 15, ein Lagerelement 17 auf. Das Vorfilter 12 weist einen Bereich 13, der während des Rückspülbetriebs vom Spülmedium nicht durchdrungen werden kann. Der Bereich des Vorfilters 12 ist ringförmig umlaufend ausgebildet und weist im Wesentlichen radial verlaufende Kanäle auf, die im Weiteren als zweite Kanäle bezeichnet werden. Diese Kanäle münden im Inneren des Vorfilters 12 in ersten Kanalenden und auf der Außenseite in zweiten Kanalenden 14.

In der Filtereinheit 15 ist das Spritzmittel 1 drehbar angeordnet. Das Spritzmittel 1 ist als Impeller ausgeführt. Aus der bereits erwähnten europäischen Druckschrift sind derartige Impeller bereits bekannt. In der Druckschrift ist die grundsätzliche Funktion eines derartigen Impellers beschrieben. Das Spritzmittel 1 weist eine zentrale, sich axial erstreckende Öffnung auf, die als Durchströmraum 5 dient. Das Spülmedium wird, nachdem es durch das Vorfilter 12 in das Innere der Filtereinheit 15 eingetreten ist, in den Durchströmraum geleitet. In dem Durchströmraum 5 wird das Fluid dann zu Austrittsdüsen 2 des Spritzmittels 1 geführt. Die Austrittsdüsen 2 sind als Flachdüsen ausgeführt und mehrere der Austrittsdüsen erstrecken sich in der Wandung hintereinander liegend in axialer Richtung des Spritzmittels 1. Die Düsen sind so ausgerichtet, dass das Spülmedium im Wesentlichen radial aus den Austrittsdüsen 2 austritt, zugleich aber durch das austretende Spülmedium ein Drehmoment zum Antreiben der Drehbewegung des Spritzmittels 1 erzeugt wird. Im Rückspülbetrieb wird dadurch die Rotation des Spritzmittels 1 hervorgerufen, durch die dafür Sorge getragen wird, dass die Innenseite des Hauptfilters 11 gleichmäßig von dem aus den Austrittsdüsen 2 austretenden Flüssigkeitsströmen abgespritzt wird.

Zwischen den schlitzförmigen hintereinander angeordneten, als Flachdüsen ausgeführten Austrittsdüsen 2 und dem Durchströmraum 5 ist jeweils ein Bewegungsraum 3 angeordnet, in denen sich Strömungsstörkörper 6 in einer ersten Richtung bewegen können. Der Bewegungsraum 3 geht einerseits in die Austrittsdüsen 2 über und ist andererseits über einen Längsschlitz 4 mit dem Durchströmraum 5 strömungstechnisch verbunden. Der Schlitz 4 ist dabei so breit, dass die Strömungsstörkörper 6 nicht durch den Schlitz 4 in den Durchströmraum 5 eintreten können. Die Strömungsstörkörper 6 sind somit in dem Bewegungsraum 3 gefangen und können nur in der ersten Richtung parallel zur Achse des Spritzmittels 1 bewegt werden.

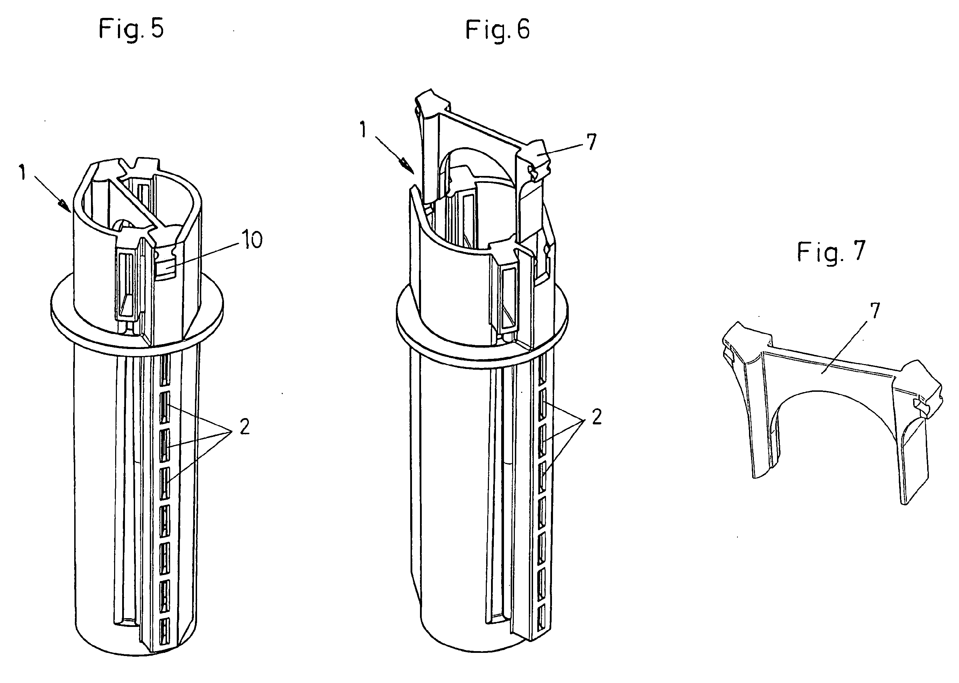

Am oberen Ende des Bewegungsraums 3 mündet ein erster Kanal 8 mit einem ersten Kanalende 9 in den Bewegungsraum 3 ein. Der erste Kanal 8 wird durch das Spritzmittel 1 und ein in das Spritzmittel 1 eingesetztes Einsteckteil (7, Fig. 7) gebildet. Über den ersten Kanal 8 kann dem Bewegungsraum 3 im Rückspülbetrieb ein Teil des Spülmediums zugeführt werden. Erste Kanalenden 9 des ersten Kanals sind dabei so gestaltet, dass die aus dem ersten Kanal 8 in den Bewegungsraum 3 einströmende Flüssigkeit die erste Richtung hat. Durch die aus dem ersten Kanal 8 einströmende Flüssigkeit werden die Strömungsstörkörper, die eine geringere Dichte haben als das Spülmedium, nach unten gedrückt.

Der erste Kanal 8 hat ein zweites Kanalende 10, das auf der Außenseite des Spritzmittels 1 in einer ersten Fläche mündet. Diese erste Fläche des Spritzmittels 1 liegt im Rückspülbetrieb der Filtereinrichtung der zweiten Fläche d. h. der Innenseite des Vorfilters 12 an. Die beiden Flächen bewegen sich im Rückspülbetrieb relativ zueinander, da das Spritzmittel 1 sich relativ zum Filter der Filtereinheit 15 dreht. Während der Drehung des Spritzmittels 1 kommen das erste Ende des zweiten Kanals und das zweite Kanalende 10 des ersten Kanals 8 in eine strömungstechnische Verbindung. Das Spülmedium, was über den zweiten Kanal zugeführt wird, kann in den Momenten der strömungstechnischen Verbindung zwischen dem zweiten Kanal und dem ersten Kanal 8 in den ersten Kanal 8 eintreten. Dadurch tritt aus dem ersten Kanalende 9 des ersten Kanals 8 stoß- oder impulsweise das Spülmedium aus. Die Strömungsstörkörper 6 nehmen den Strömungsimpuls auf und werden dadurch impulsartig oder stoßartig nach unten gedrückt und steigen anschließend nach Abbruch der strömungstecnischen Verbindung zwischen dem ersten und dem zweiten Kanal aufgrund ihrer geringen Dichte wieder nach oben. Durch die dauerhafte Rotation des Spritzmittels 1 erfahren die Strömungsstörkörper 6 so eine andauernde Verschiebung innerhalb des Bewegungsraums 3.

Durch die Abwärtsbewegung der Strömungsstörkörper 6 aufgrund der aus dem ersten Kanal austretenden pulsierenden Strömung und dem Aufsteigen der Strömungsstörkörper aufgrund ihrer geringen Dichte zwischen zwei Impulsen einerseits und der gleichzeitigen radialen Strömung des Spülmediums aus dem Durchströmraum 5 zu den Austrittsdüsen 2 andererseits bilden sich chaotische Strömungen zwischen einzelnen Strömungsstörkörpern 6 innerhalb des Bewegungsraums, die weiter zu den Austrittsdüsen 2 gelangen. Aufgrund der unvorhersagbaren Verteilung der Strömungsstörkörper in dem Bewegungsraum 3 entstehen im Bewegungsraum 3 und auch an den Austrittsdüsen 2 Zonen mit größerer und Zonen mit geringerer Strömung. Darüber hinaus führen die stets wechselnden Abstände zwischen einzelnen Strömungsstörkörpern 6 zur Erzeugung ständig variierender durchströmter Querschnitte, durch die das Spülmedium stellenweise beschleunigt wird. Dadurch wird eine verbesserte Reinigungsleistung erzielt. Gleichzeitig verengen die Strömungsstörkörper 6 insgesamt die verfügbare Querschnittsfläche der Flachdüsen 2, so dass zur Erzielung dieser verbesserten Reinigungsleistung insgesamt weniger Spülmedium erforderlich ist. Im Verlaufe mehrerer Umdrehungen besteht dabei für die gesamte Fläche des Hauptfilters 11 eine statistische Wahrscheinlichkeit, von einem gezielten Düsenstrahl erfasst und somit sehr effektiv rückgespült zu werden.

## Patentansprüche

1. Rückspülbare Filtereinrichtung, insbesondere für eine Hauswasseranlage,
- mit einem Hauptfilter (11), mit dem im Normalbetrieb ein zu filterndes Medium filterbar ist und
- mit einem Spritzmittel (1), mit dem im Rückspülbetrieb das Hauptfilter (11) abspritzbar ist und das im Rückspülbetrieb zum Abspritzen des Hauptfilters (11) bewegbar ist,
- wobei das Spritzmittel (1) eine oder mehrere Austrittsdüsen (2) umfasst,
**dadurch gekennzeichnet,**
- **dass** in einem Bereich strömungstechnisch vor den Austrittsdüsen (2) Strömungsstörkörper (6) beweglich angeordnet sind.

2. Filtereinrichtung nach Anspruch 1, **dadurch gekennzeichnet, dass** die Strömungsstörkörper (6) Kugeln sind.

3. Filtereinrichtung nach Anspruch 1 oder 2, **dadurch gekennzeichnet, dass** die Filtereinrichtung Elemente zur Erzeugung von im Rückspülbetrieb auf die Strömungsstörkörper (6) einwirkenden Impulsen (lmpulselemente 8, 9, 10, 14) aufweist.

4. Vorrichtung nach Anspruch 3, **dadurch gekennzeichnet, dass** die lmpulselemente (8, 9, 10, 14) so angeordnet sind, dass im Rückspülbetrieb die lmpulse mit einer ersten Richtung im Wesentlichen quer zur Bewegungsrichtung des Spülmediums auf die Strömungsstörköper (6) einwirken.

5. Filtereinrichtung nach einem der Ansprüche 1 bis 4, **dadurch gekennzeichnet, dass** die Strömungsstörkörper (6) in einem Raum angeordnet sind, in dem die Strömungsstörkörper (6) zumindest in der ersten Richtung bewegbar sind (Bewegungsraum 3).

6. Filtereinrichtung nach einem der Ansprüche 1 bis 5, **dadurch gekennzeichnet, dass** das Hauptfilter (11) hohlzylindrisch ausgebildet ist.

7. Filtereinrichtung nach Anspruch 6, **dadurch gekennzeichnet, dass** das Spritzmittel (1) drehbar in dem Hauptfilter (11) gelagert ist.

8. Filtereinrichtung nach Anspruch 7, **dadurch gekennzeichnet, dass** die Austrittsdüsen (2) des Spritzmittels (1) radial nach außen ausgerichtet sind.

9. Filtereinrichtung nach einem der Ansprüche 5 bis 8, **dadurch gekennzeichnet, dass** der Bewegungsraum (3) radial innenliegend zu den Austrittsdüsen (2) in dem Spritzmittel vorgesehen ist.

10. Filtereinrichtung nach einem der Ansprüche 1 bis 9, **dadurch gekennzeichnet, dass** die Austrittsdüsen (2) schlitzförmig ausgebildet sind.

11. Filtereinrichtung nach einem der Ansprüche 5 bis 10, **dadurch gekennzeichnet, dass** mehreren linear benachbart zueinander angeordnete Austrittsdüsen (2) ein gemeinsamer Bewegungsraum (3) zugeordnet ist.

12. Filtereinrichtung nach einem der Ansprüche 7 bis 11, **dadurch gekennzeichnet, dass** das Spritzmittel (1) einen sich im Wesentlichen axial erstreckenden zentralen Durchströmraum (5) aufweist, durch den das Spülmedium im Rückspülbetrieb hindurchströmen kann.

13. Filtereinrichtung nach Anspruch 12, **dadurch gekennzeichnet, dass** der Durchströmraum (5) strömungstechnisch mit dem Bewegungsraum (3) beziehungsweise den Bewegungsräumen verbunden ist.

14. Filtereinrichtung nach einem der Ansprüche 3 bis 12, **dadurch gekennzeichnet, dass** die Impulselemente (8, 9, 10, 14) zumindest einen ersten Kanal (8) im Spritzmittel (1) umfassen.

15. Filtereinrichtung nach Anspruch 14, **dadurch gekennzeichnet, dass** jeder erster Kanal (8) einem Bewegungsraum (3) zugeordnet und mit diesem strömungstechnisch verbunden ist, wobei eine Mündung der ersten Kanäle (8) an ihren ersten Kanalenden (9) in dem Bewegungsraum (3) so ausgestaltet ist, dass ein Fluid in der ersten Richtung in den zugeordneten Bewegungsraum einströmt.

16. Filtereinrichtung nach einem der Ansprüche 5 bis 15, **dadurch gekennzeichnet, dass** der Bewegungsraum (3) sich parallel zur Rotationsachse des Spritzmittels (1) erstreckt.

17. Filtereinrichtung nach Anspruch 16, **dadurch gekennzeichnet, dass** sich in einer senkrechten Einbaurichtung des Spritzmittels (1) beziehungsweise des Hauptfilters (11) die ersten Kanalenden (9) der ersten Kanäle (8) am unteren Ende der zugeordneten Bewegungsräume (3) befinden.

18. Filtereinrichtung nach Anspruch 17, **dadurch gekennzeichnet, dass** die Strömungsstörkörper (6) eine Dichte haben, die größer ist als die Dichte des Spülmediums.

19. Filtereinrichtung nach Anspruch 16, **dadurch gekennzeichnet, dass** in seiner senkrechten Einbaurichtung des Spritzmittels (1) beziehungsweise des Hauptfilters (11) die ersten Kanalenden (9) der ersten Kanäle (8) am oberen Ende der zugeordneten Bewegungsräume (3) sind.

20. Filtereinrichtung nach Anspruch 19, **dadurch gekennzeichnet, dass** die Strömungsstörköper (6) eine Dichte haben, die kleiner ist als die Dichte des Spülmediums.

21. Filtereinrichtung nach einem der Ansprüche 14 bis 20, **dadurch gekennzeichnet, dass** die ersten Kanäle zweite Kanalenden (10) haben, die in einer im Spülbetrieb außenliegenden und rotierenden ersten Fläche des Spritzmittels (1) liegen.

22. Filtereinrichtung nach Anspruch 21, **dadurch gekennzeichnet, dass** die Impulselemente (8, 9, 10, 14) zumindest einen zweiten Kanal umfassen, der in einem sich im Rückspülbetrieb relativ zu dem Spritzmittel (1) drehenden Teil (12) vorgesehen ist.

23. Filtereinrichtung nach Anspruch 22, **dadurch gekennzeichnet, dass** das Teil (12) das Hauptfilter (11) ist oder dass das Teil (12) fest mit dem Hauptfilter (11) verbunden ist.

24. Filtereinrichtung nach Anspruch 22 oder 23, **dadurch gekennzeichnet, dass** das Teil (12) ein Vorfilter (12) ist, über das beim Rückspülen dem Hauptfilter (11) des Spülmediums zuführbar ist.

25. Filtereinrichtung nach einem der Ansprüche 22 bis 24, **dadurch gekennzeichnet, dass** der zweite Kanal ein zweites Kanalende (14) aufweist, das in einem Bereich der Filtereinrichtung mündet, über den im Rückspülbetrieb das Spülmedium dem Hauptfilter (11) zumindest mittelbar zuführbar ist.

26. Filtereinrichtung nach Anspruch 25, **dadurch gekennzeichnet, dass** das zweite Kanalende (14) des zweiten Kanals in einem bezogen auf den Rückspülbetrieb vor dem Vorfilter (12) liegenden Bereich der Filtereinrichtung mündet.

27. Filtereinrichtung nach einem der Ansprüche 22 bis 25, **dadurch gekennzeichnet, dass** der zweite Kanal zumindest ein erstes Kanalende aufweist, das in einer zweiten Fläche des Teils (12) mündet, die im Rückspülbetrieb an der ersten Fläche des Spritzmittels (1) rotierend anliegt.

28. Filtereinrichtung nach Anspruch 27, **dadurch gekennzeichnet, dass** die ersten Kanalenden der zweiten Kanäle im Rückspülbetrieb bei einer Umdrehung des Spritzmittels (1) mit zumindest einem zweiten Kanalende (10) eines ersten Kanals (8) in strömungstechnischer Verbindung sind.

## Claims

1. Backflushable filter arrangement, in particular for a domestic water system,
- with a main filter (11), with which in normal operation a medium to be filtered can be filtered, and
- with a spraying means (1), with which in backflushing operation the main filter (11) can be sprayed down and which in backflushing operation can be moved for spraying down the main filter (11),
- the spraying means (1) comprising one or more outlet nozzles (2),
**characterized in that**
- flow-disturbing bodies (6) are arranged movably in a region in front of the outlet nozzles (2) with regard to flow.

2. Filter arrangement according to Claim 1, **characterized in that** the flow-disturbing bodies (6) are balls.

3. Filter arrangement according to Claim 1 or 2, **characterized in that** the filter arrangement has elements for generating impulses (impulse elements 8, 9, 10, 14) which act on the flow-disturbing bodies (6) in backflushing operation.

4. Device according to Claim 3, **characterized in that** the impulse elements (8, 9, 10, 14) are arranged in such a way that in backflushing operation the impulses act on the flow-disturbing bodies (6) with a first direction essentially transverse to the movement direction of the flushing medium.

5. Filter arrangement according to one of Claims 1 to 4, **characterized in that** the flow-disturbing bodies (6) are arranged in a space in which the flow-disturbing bodies (6) can be moved at least in the first direction (movement space 3).

6. Filter arrangement according to one of Claims 1 to 5, **characterized in that** the main filter (11) is of hollow cylindrical design.

7. Filter arrangement according to Claim 6, **characterized in that** the spraying means (1) is mounted rotatably in the main filter (11).

8. Filter arrangement according to Claim 7, **characterized in that** the outlet nozzles (2) of the spraying means (1) are oriented radially outwards.

9. Filter arrangement according to one of Claims 5 to 8, **characterized in that** the movement space (3) is provided in the spraying means radially internally in relation to the outlet nozzles (2).

10. Filter arrangement according to one of Claims 1 to 9, **characterized in that** the outlet nozzles (2) are of slot-shaped design.

11. Filter arrangement according to one of Claims 5 to 10, **characterized in that** a number of outlet nozzles (2) arranged linearly adjacent to one another are assigned a common movement space (3).

12. Filter arrangement according to one of Claims 7 to 11, **characterized in that** the spraying means (1) has an essentially axially extending central flowthrough space (5), through which the flushing medium can flow in backflushing operation.

13. Filter arrangement according to Claim 12, **characterized in that** the flowthrough space (5) is connected to the movement space (3) or movement spaces with regard to flow.

14. Filter arrangement according to one of Claims 3 to 12, **characterized in that** the impulse elements (8, 9, 10, 14) comprise at least one first channel (8) in the spraying means (1).

15. Filter arrangement according to Claim 14, **characterized in that** each first channel (8) is assigned to a movement space (3) and connected to it with regard to flow, a mouth of the first channels (8) at their first channel ends (9) in the movement space (3) being designed in such a way that a fluid flows into the associated movement space in the first direction.

16. Filter arrangement according to one of Claims 5 to 15, **characterized in that** the movement space (3) extends parallel to the axis of rotation of the spraying means (1).

17. Filter arrangement according to Claim 16, **characterized in that** the first channel ends (9) of the first channels (8) are located at the lower end of the associated movement spaces (3) in a vertical installation direction of the spraying means (1), or of the main filter (11).

18. Filter arrangement according to Claim 17, **characterized in that** the flow-disturbing bodies (6) have a density greater than the density of the flushing medium.

19. Filter arrangement according to Claim 16, **characterized in that** the first channel ends (9) of the first channels (8) are at the upper end of the associated movement spaces (3) in a vertical installation direction of the spraying means (1), or of the main filter (11).

20. Filter arrangement according to Claim 19, **characterized in that** the flow-disturbing bodies (6) have a density lower than the density of the flushing medium.

21. Filter arrangement according to one of Claims 14 to 20, **characterized in that** the first channels have second channel ends (10), which lie in a first surface of the spraying means (1) which is external and rotates in backflushing operation.

22. Filter arrangement according to Claim 21, **characterized in that** the impulse elements (8, 9, 10, 14) comprise at least one second channel, which is provided in a part (12) which rotates relative to the spraying means (1) in backflushing operation.

23. Filter arrangement according to Claim 22, **characterized in that** the part (12) is the main filter (11) or **in that** the part (12) is connected firmly to the main filter (11).

24. Filter arrangement according to Claim 22 or 23, **characterized in that** the part (12) is a prefilter (12), via which the flushing medium can be supplied to the main filter (11) during backflushing.

25. Filter arrangement according to one of Claims 22 to 24, **characterized in that** the second channel has a second channel end (14), which opens in a region of the filter arrangement via which in backflushing operation the flushing medium can be supplied at least indirectly to the main filter (11).

26. Filter arrangement according to Claim 25, **characterized in that** the second channel end (14) of the second channel opens in a region of the filter arrangement lying in front of the prefilter (12) relative to the backflushing operation.

27. Filter arrangement according to one of Claims 22 to 25, **characterized in that** the second channel has at least one first channel end, which opens in a second surface of the part (12), which surface lies rotatingly adjacent to the first surface of the spraying means (1) in backflushing operation.

28. Filter arrangement according to Claim 27, **characterized in that** in backflushing operation the first channel ends of the second channels are in flow communication with at least one second channel end (10) of a first channel (8) during a revolution of the spraying means (1).

## Revendications

1. Dispositif de filtration avec lavage à contre-courant, notamment pour une installation d'eau domestique,
- comprenant un filtre principal (11) avec lequel un fluide à filtrer peut être filtré en mode de fonctionnement normal et
- comprenant un moyen de pulvérisation (1) avec lequel le filtre principal (11) peut être pulvérisé en mode de lavage à contre-courant et qui peut être déplacé en mode de lavage à contre-courant pour pulvériser le filtre principal (11),
- le moyen de pulvérisation (1) comprenant une ou plusieurs buses de sortie (2),
**caractérisé en ce que**
- dans une région située avant les buses de sortie (2) selon la technique d'écoulement, sont disposés des éléments mobiles perturbant l'écoulement (6).

2. Dispositif de filtration selon la revendication 1, **caractérisé en ce que** les éléments perturbant l'écoulement (6) sont des billes.

3. Dispositif de filtration selon la revendication 1 ou 2, **caractérisé en ce que** le dispositif de filtration présente des éléments pour produire des impulsions (éléments d'impulsion 8, 9, 10, 14) agissant en mode de lavage à contre-courant sur les éléments perturbant l'écoulement (6).

4. Dispositif selon la revendication 3, **caractérisé en ce que** les éléments d'impulsion (8, 9, 10, 14) sont disposés de telle sorte que les impulsions en mode de lavage à contre-courant agissent sur les éléments perturbant l'écoulement (6) avec une première direction essentiellement transversale à la direction du mouvement du fluide de lavage.

5. Dispositif de filtration selon l'une quelconque des revendications 1 à 4, **caractérisé en ce que** les éléments perturbant l'écoulement (6) sont disposés dans un espace dans lequel les éléments perturbant l'écoulement (6) peuvent se déplacer au moins dans la première direction (espace de déplacement 3).

6. Dispositif de filtration selon l'une quelconque des revendications 1 à 5, **caractérisé en ce que** le filtre principal (11) est réalisé avec une forme cylindrique creuse.

7. Dispositif de filtration selon la revendication 6, **caractérisé en ce que** le moyen de pulvérisation (1) est monté à rotation dans le filtre principal (11).

8. Dispositif de filtration selon la revendication 7, **caractérisé en ce que** les buses de sortie (2) du moyen de pulvérisation (1) sont orientées radialement vers l'extérieur.

9. Dispositif de filtration selon l'une quelconque des revendications 5 à 8, **caractérisé en ce que** l'espace de déplacement (3) est prévu radialement à l'intérieur par rapport aux buses de sortie (2) dans le moyen de pulvérisation.

10. Dispositif de filtration selon l'une quelconque des revendications 1 à 9, **caractérisé en ce que** les buses de sortie (2) sont réalisées en forme de fente.

11. Dispositif de filtration selon l'une quelconque des revendications 5 à 10, **caractérisé en ce qu'**un espace de déplacement commun (3) est associé à plusieurs buses de sortie (2) disposées en ligne les unes à côté des autres.

12. Dispositif de filtration selon l'une quelconque des revendications 7 à 11, **caractérisé en ce que** le moyen de pulvérisation (1) présente un espace d'écoulement central (5) s'étendant essentiellement axialement, à travers lequel le fluide de lavage peut s'écouler en mode de lavage à contre-courant.

13. Dispositif de filtration selon la revendication 12, **caractérisé en ce que** l'espace d'écoulement (5) est connecté selon la technique d'écoulement à l'espace de déplacement (3) ou aux espaces de déplacement.

14. Dispositif de filtration selon l'une quelconque des revendications 3 à 12, **caractérisé en ce que** les éléments d'impulsion (8, 9, 10, 14) comprennent au moins un premier canal (8) dans le moyen de pulvérisation (1).

15. Dispositif de filtration selon la revendication 14, **caractérisé en ce que** l'on associe à chaque premier canal (8) un espace de déplacement (3) qui lui est connecté selon la technique d'écoulement, une embouchure des premiers canaux (8) au niveau de leurs premières extrémités de canal (9) dans l'espace de déplacement (3) étant configurée de telle sorte qu'un fluide afflue dans la première direction dans l'espace de déplacement associé.

16. Dispositif de filtration selon l'une quelconque des revendications 5 à 15, **caractérisé en ce que** l'espace de déplacement (3) s'étend parallèlement à l'axe de rotation du moyen de pulvérisation (1).

17. Dispositif de filtration selon la revendication 16, **caractérisé en ce que** les premières extrémités de canal (9) des premiers canaux (8) se trouvent, dans une direction de construction verticale du moyen de pulvérisation (1) ou du filtre principal (11), à l'extrémité inférieure des espaces de déplacement associés (3).

18. Dispositif de filtration selon la revendication 17, **caractérisé en ce que** les éléments perturbant l'écoulement (6) ont une densité qui est supérieure à la densité du fluide de lavage.

19. Dispositif de filtration selon la revendication 16, **caractérisé en ce que**, dans la direction de construction verticale du moyen de pulvérisation (1) ou du filtre principal (11), les premières extrémités de canal (9) des premiers canaux (8) sont situées à l'extrémité supérieure des espaces de déplacement associés (3).

20. Dispositif de filtration selon la revendication 19, **caractérisé en ce que** les éléments perturbant l'écoulement (6) ont une densité qui est inférieure à la densité du fluide de lavage.

21. Dispositif de filtration selon l'une quelconque des revendications 14 à 20, **caractérisé en ce que** les premiers canaux ont deux extrémités de canal (10) qui se situent dans une première surface du moyen de pulvérisation (1) située à l'extérieur et tournant pendant le mode de lavage.

22. Dispositif de filtration selon la revendication 21, **caractérisé en ce que** les éléments d'impulsion (8, 9, 10, 14) comprennent au moins un deuxième canal, qui est prévu dans une partie (12) tournant par rapport au moyen de pulvérisation (1) en mode de lavage à contre-courant.

23. Dispositif de filtration selon la revendication 22, **caractérisé en ce que** la partie (12) est le filtre principal (11) ou **en ce que** la partie (12) est connectée fixement au filtre principal (11).

24. Dispositif de filtration selon la revendication 22 ou 23, **caractérisé en ce que** la partie (12) est un préfiltre (12) par le biais duquel le fluide de lavage peut être acheminé lors du lavage à contre-courant au filtre principal (11).

25. Dispositif de filtration selon l'une quelconque des revendications 22 à 24, **caractérisé en ce que** le deuxième canal présente une deuxième extrémité de canal (14) qui débouche dans une région du dispositif de filtration par le biais de laquelle le fluide de lavage peut être acheminé au moins indirectement au filtre principal (11) en mode de lavage à contre-courant.

26. Dispositif de filtration selon la revendication 25, **caractérisé en ce que** la deuxième extrémité de canal (14) du deuxième canal débouche dans une région du dispositif de filtration située avant le préfiltre (12) par rapport au mode de lavage à contre-courant.

27. Dispositif de filtration selon l'une quelconque des revendications 22 à 25, **caractérisé en ce que** le deuxième canal présente au moins une première extrémité de canal qui débouche dans une deuxième surface de la partie (12) qui s'applique en rotation contre la première surface du moyen de pulvérisation (1) en mode de lavage à contre-courant.

28. Dispositif de filtration selon la revendication 27, **caractérisé en ce que** les premières extrémités de canal des deuxièmes canaux sont en liaison, selon la technique d'écoulement, en mode de lavage à contre-courant, dans le cas d'une rotation du moyen de pulvérisation (1), avec au moins une deuxième extrémité de canal (10) d'un premier canal (8).
